# EUROPÄISCHE PATENTSCHRIFT

(11) **EP 1 664 888 B1**
(45) Veröffentlichungstag und Bekanntmachung des Hinweises auf die Patenterteilung: **26.11.2008**
(21) Anmeldenummer: 04787202.3
(22) Anmeldetag: 23.09.2004
(51) Int. Cl.: G02B 21/00, G02B 21/06

(54) **RASTERMIKROSKOP MIT EVANESZENTER BELEUCHTUNG**
SCANNING MICROSCOPE WITH EVANESCENT WAVE ILLUMINATION
MICROSCOPE A BALAYAGE AVEC ECLAIRAGE EVANESCENT

(30) Priorität: 25.09.2003 DE 10344410
(43) Veröffentlichungstag der Anmeldung: 07.06.2006
(73) Patentinhaber: Leica Microsystems CMS GmbH, 35578 Wetzlar (DE)
(72) Erfinder: ULRICH, Heinrich, 69121 Heidelberg (DE); KNEBEL, Werner, 76709 Kronau (DE); MÖLLMANN, Kyra, 67705 Trippstadt (DE)
(74) Vertreter: Naumann, Ulrich
(86) Internationale Anmeldenummer: PCT/EP2004/052296
(87) Internationale Veröffentlichungsnummer: WO 2005/029151

(56) Entgegenhaltungen:
- DE-A- 19 902 234
- US-A1- 2003 058 530
- US-B1- 6 255 642
- V. PROTASENKO, A. GALLAGHER, M. LABARDI, D.J. NESBITT: "Enhancement and quenching of the fluorescence of single CdSe/ZnS quantum dots studied by confocal apertureless near-field scanning optical microscope" PROCEEDINGS OF SPIEADVANCED CHARACTERIZATION TECHNIQUES FOR OPTICS, SEMICONDUCTORS, AND NANOTECHNOLOGIES, Bd. 5188, November 2003 (2003-11), Seiten 254-263, XP002312031
- KAWATA S ET AL: "NEAR-FIELD SCANNING OPTICAL MICROSCOPE WITH A LASER TRAPPED PROBE" JAPANESE JOURNAL OF APPLIED PHYSICS, PUBLICATION OFFICE JAPANESE JOURNAL OF APPLIED PHYSICS. TOKYO, JP, Bd. 33, Nr. 12A, 1. Dezember 1994 (1994-12-01), Seiten L1725-L1727, XP000682439 ISSN: 0021-4922

## Beschreibung

Die Erfindung betrifft ein Rastermikroskop, mit einer Lichtquelle zur Erzeugung eines Beleuchtungslichtstrahlenbündels, mit einem Objektiv und einem Punktdetektor, wobei die Lichtquelle zum evaneszenten Beleuchten einer auf einem Objektträger angeordneten Probe dient, wobei das Objektiv eine Objektivpupille aufweist und das Beleuchtungslicht durch den Außen-Randbereich der Objektivpupille verläuft und wobei der Punktdetektor von einem Rasterpunkt der Probe ausgehendes Detektionslicht empfängt.
In der Rastermikroskopie wird eine Probe mit einem Lichtstrahl beleuchtet, um das von der Probe emittierte Detektionslicht, als Reflexions- oder Fluoreszenzlicht, zu beobachten. Der Fokus eines Beleuchtungslichtstrahlenbündels wird mit Hilfe einer steuerbaren Strahlablenkeinrichtung, im Allgemeinen durch Verkippen zweier Spiegel, in einer Probenebene bewegt, wobei die Ablenkachsen meist senkrecht aufeinander stehen, so dass ein Spiegel in x-, der andere in y-Richtung ablenkt. Die Verkippung der Spiegel wird beispielsweise mit Hilfe von Galvanometer-Stellelementen bewerkstelligt. Die Leistung des vom Objekt kommenden Detektionslichtes wird in Abhängigkeit von der Position des Abtaststrahles gemessen. Üblicherweise werden die Stellelemente mit Sensoren zur Ermittlung der aktuellen Spiegelstellung ausgerüstet. Speziell in der konfokalen Rastermikroskopie wird ein Objekt mit dem Fokus eines Lichtstrahls in drei Dimensionen abgetastet.

Ein konfokales Rastermikroskop umfasst im Allgemeinen eine Lichtquelle, eine Fokussieroptik, mit der das Licht der Quelle auf eine Lochblende - die sog. Anregungsblende - fokussiert wird, einen Strahlteiler, eine Strahlablenkeinrichtung zur Strahlsteuerung, eine Mikroskopoptik, eine Detektionsblende und die Detektoren zum Nachweis des Detektions- bzw. Fluoreszenzlichtes. Das Beleuchtungslicht wird über einen Strahlteiler eingekoppelt. Das vom Objekt kommende Fluoreszenz- oder Reflexionslicht gelangt über die Strahlablenkeinrichtung zurück zum Strahlteiler, passiert diesen, um anschließend auf die Detektionsblende fokussiert zu werden, hinter der sich die Detektoren befinden. Diese Detektionsanordnung wird Descan-Anordnung genannt. Detektionslicht, das nicht direkt aus der Fokusregion stammt, nimmt einen anderen Lichtweg und passiert die Detektionsblende nicht, so dass man eine Punktinformation erhält, die durch sequentielles Abtasten des Objekts mit dem Fokus des Beleuchtungslichtstrahlenbündels zu einem dreidimensionalen Bild führt. Meist wird ein dreidimensionales Bild durch schichtweise Bilddatennahme erzielt.

Aus US 2002/0097489 A1 ist ein Mikroskop mit evaneszenter Beleuchtung einer Probe bekannt. Das Mikroskop beinhaltet eine Weißlichtquelle, deren Licht über eine Schlitzblende durch das Mikroskopobjektiv hindurch in den eine Probe tragenden Objektträger zur evaneszenten Beleuchtung eingekoppelt wird. Das Beleuchtungslicht pflanzt sich in dem Objektträger durch totalinterne Reflektion fort, wobei die Beleuchtung der Probe nur im Bereich des aus dem Objektträger herausragenden evaneszenten Feldes erfolgt. Mikroskope dieser Art sind unter dem Begriff TIRFM (Total Internal Reflection Fluorescent Microscope) bekannt.

Die z-Auflösung von TIRF-Mikroskopen ist aufgrund des nur ca. 100 nm in die Probe ragenden evaneszenten Feldes außerordentlich gut.

Es ist die Aufgabe der vorliegenden Erfindung, ein Rastermikroskop anzugeben, bei dem mit evaneszenter Beleuchtung eine optimierte Bildqualität erreichbar ist.

Die Aufgabe wird durch ein Rastermikroskop gelöst, welches gekennzeichnet ist durch eine im Strahlengang des Detektionslichts angeordnete erste ansteuerbare Strahlablenkeinrichtung zum zeitabhängigen Verschieben der Position des Rasterpunktes in der Probe und eine im Strahlengang des Beleuchtungslichts angeordnete zweite ansteuerbare Strahlablenkeinrichtung zur Veränderung der räumlichen Lage des Beleuchtungslichts während der Untersuchung.

Die Erfindung hat den Vorteil, dass sowohl eine Abrasterung der Probe in zwei Dimensionen oder in drei Dimensionen, als auch ein stark gesteigertes Auflösungsvermögen in z-Richtung ermöglicht ist.

Das Abrastem der Probe in lateraler Richtung (xy-Richtung) wird mit Hilfe der im Strahlengang des Detektionslichts angeordneten Strahlablenkeinrichtung bewirkt. Zum Abrastem der Probe in axialer Richtung (z-Richtung) ist der Relativabstand von Probe und Objektiv verstellbar. Hierzu kann entweder die Probe auf einen höhenverstellbaren Tisch angeordnet sein oder ein in z-Richtung verstellbares Objektiv verwendet werden.

Das Beleuchtungslicht ist durch das Objektiv des Rastermikroskops in das Deckglas der Probe einkoppelbar. In einer anderen Variante wird das Beleuchtungslicht durch den Kondensor des Rastermikroskops in den Objektträger eingekoppelt.

Das Beleuchtungslicht verläuft durch den Außenrandbereich der Objektivpupille, um zu gewährleisten, dass der kritische Winkel der Totalreflexion im Deckglas erreicht wird. Das Beleuchtungslicht ist zu einem Beleuchtungslichtstrahlenbündel geformt, das vorzugsweise in der Ebene der Objektivpupille einen Fokus aufweist. Das Beleuchtungslichtstrahlenbündel kann während der Untersuchung einer Probe ortsfest bleiben. In einer besonders bevorzugten Variante ist das Beleuchtungslichtstrahlenbündel mit Hilfe einer weiteren Strahlablenkeinrichtung kreisend durch den Außenbereich der Objektivpupille beweglich. Hierdurch wird in besonders vorteilhafter Weise eine sehr homogene und gleichmäßige Beleuchtung erreicht.

Das Objektiv weist vorzugsweise eine numerische Apertur auf, die größer als 1,3 ist und besonders vorteilhafterweise zwischen 1,35 und 1,42 liegt.

In einer bevorzugten Ausgestaltungsform ist im Strahlengang des Beleuchtungslichtes vorzugsweise in der Ebene der Objektivpupille eine farbselektive Segmentblende angeordnet. Die farbselektive Segmentblende weißt im Außenrandbereich andere optische Eigenschaften auf, als im Innenbereich. Vorzugsweise ist die farbselektive Segmentblende im Außenrandbereich für Licht der Wellenlänge des Beleuchtungslichts transparent, während sie im Innenbereich ausschließlich für Licht oberhalb der Wellenlänge des Beleuchtungslichts transparent ist. Diese Ausgestaltungsvariante ist insbesondere für Fluoreszenzanwendungen, bei denen die Wellenlänge des Detektionslichts naturgemäß oberhalb der Wellenlänge des Beleuchtungslichts liegt, besonders zu bevorzugen.

In einer anderen Variante ist die farbselektive Segmentblende im Innenbereich ausschließlich für Licht unterhalb der Wellenlänge des Beleuchtungslichts transparent. Diese Variante ist insbesondere zur Mehrphotonenanregung der Probe geeignet. Hierbei ist das Beleuchtungslicht vorzugsweise gepulstes Infrarotlicht.

Mit Hilfe der farbselektiven Segmentblende wird vermieden, dass Beleuchtungslicht außerhalb des Außenrandbereiches durch das Objektiv auf die Probe gelangt und die Probe direkt beleuchtet.

In einer ganz besonders bevorzugten Ausgestaltungsvariante weist das Beleuchtungslicht mehrere Wellenlängen auf. In dieser Variante sind beispielsweise mehrere unterschiedliche Probenlarbstoffe gleichzeitig optisch anregbar.

Der Punktdetektor beinhaltet vorzugsweise in einer zur Fokalebene des Objektivs korrespondierenden Ebene eine Detektionslochblende. Die räumliche Lage des Rasterpunkte, von dem der Punktdetektor Detektionslicht empfangen kann, ist durch die Position der Detektionslochblende und durch die Stellung der Strahlablenkeinrichtung festgelegt.

In einer bevorzugten Variante beinhaltet der Punktdetektor einen Multibanddetektor oder ein Spektrometer. Hierdurch ist es ermöglicht, spektrale Punktinformationen aus der Probe zu erhalten. Insbesondere in Kombination mit einer Mehrfarbbeleuchtung ist diese Ausführungsvariante von besonderem Vorteil.

Das erfindungsgemäße Rastermikroskop kann zusätzlich als konfokales Rastermikroskop ausgebildet sein, wobei gleichzeitig sowohl eine konfokale Untersuchung der Probe durch den Innenbereich der farbselektiven Segmentblende erfolgen kann, während gleichzeitig eine TIRF-Beleuchtung durch den Außenbereich der farbselektiven Segmentblende ermöglicht ist.

Zur Erzeugung des Fokus des Beleuchtungslichtstrahlenbündels in der Ebene der Objektivpupille ist im Strahlengang des Beleuchtungslichts eine Abbildungsoptik, vorzugsweise eine Bertrandtlinse vorgesehen.

In einer ganz besonders bevorzugten Ausgestaltungsform umfasst der Lichtweg des Detektionslichts mehrere Detektionskanäle, wobei in jedem der Detektionskanäle ein Bandpassfilter vorgesehen sein kann.

In der Zeichnung ist der Erfindungsgegenstand schematisch dargestellt und wird anhand der Figuren nachfolgend beschrieben, wobei gleich wirkende Elemente mit denselben Bezugszeichen versehen sind. Dabei zeigen:
Fig. 1 ein erfindungsgemäßes Rastermikroskop,
Fig. 2 eine farbselektive Segmentblende,
Fig. 3 ein weiteres erfindungsgemäßes Rastermikroskop und
Fig. 4 ein weiteres erfindungsgemäßes Rastermikroskop.

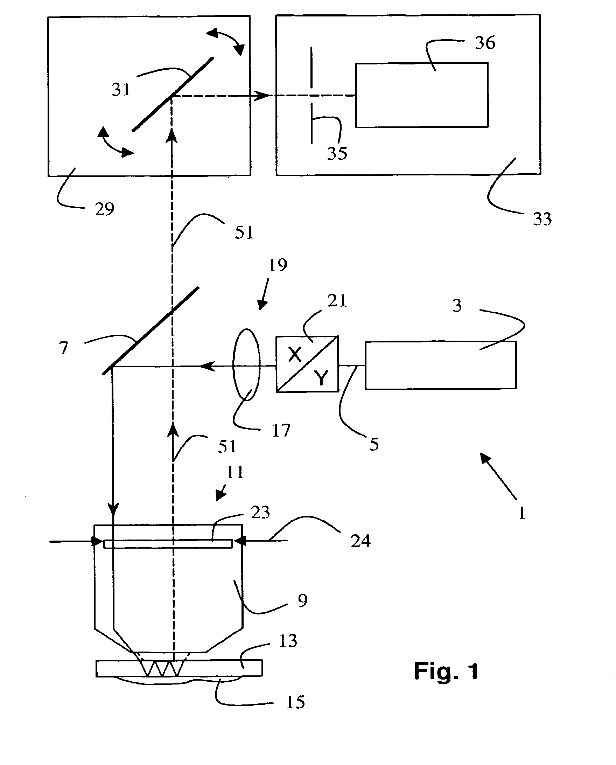

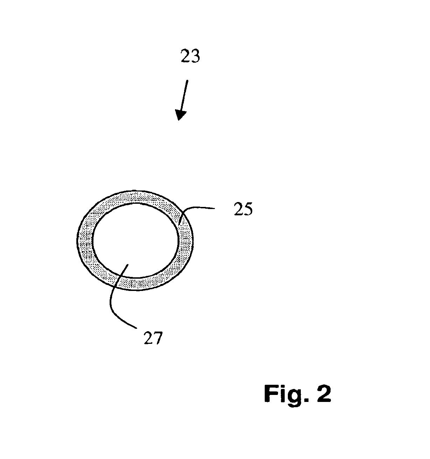

Fig. 1 zeigt ein erfindungsgemäßes Rastermikroskop mit einer Lichtquelle 1, die als Argonionenlaser 3 ausgebildet ist. Die Lichtquelle 1 erzeugt ein Beleuchtungslichtstrahlenbündel 5, das von einem Strahlteiler 7 zu dem Objektiv 9 reflektiert wird. Das Beleuchtungslichtstrahlenbündel 5 verläuft durch den Außenrandbereich der Objektivpupille 11 (durch den Doppelpfeil 24 angedeutet) und wird in das Deckglas 13 der Probe 15 zur evaneszenten Beleuchtung eingekoppelt. Im Strahlengang des Beleuchtungslichtstrahlenbündels 5 befindet sich eine als Bertrandtlinse 17 ausgebildete Abbildungsoptik 19, die in der Ebene der Objektivpupille 11 einen Fokus erzeugt. Außerdem befindet sich im Strahlengang des Beleuchtungslichtstrahlenbündels 5 eine weitere Strahlablenkeinrichtung 21, die einen nicht gezeigten kardanisch aufgehängten Scanspiegel beinhaltet. Mit Hilfe der weiteren Strahlablenkeinrichtung wird der Fokus des Beleuchtungslichtstrahlenbündels kontinuierlich kreisend durch den Außenrandbereich der Objektivpupille 11 bewegt, wodurch eine besonders homogene evaneszente Beleuchtung erreicht wird. In der Ebene der Objektivpupille 11 ist die in Fig. 2 gezeigte farbselektive Segmentblende 23 angeordnet. Die farbselektive Segmentblende 23 weist einen Außenrandbereich 25 auf, der für das Beleuchtungslicht transparent ist. Außerdem weist die farbselektive Segmentblende 23 einen Innenbereich 27 auf, der für Licht oberhalb der Wellenlänge des Beleuchtungslichts transparent ist. Das von der Probe ausgehende Detektionslicht 51 gelangt durch das Objektiv und den Innenbereich der farbselektiven Segmentblende zum Strahlteiler 7, passiert diesen und gelangt über die Strahlablenkeinrichtung 29, die einen kardanisch aufgehängten Scanspiegel 31 beinhaltet, zum Punktdetektor 33. Der Punktdetektor 33 beinhaltet eine Detektionslochblende 35, deren räumliche Lage zusammen mit der Stellung des kardanisch aufgehängten Scanspiegels 31 die Position des Rasterpunktes in der Probe bestimmt, von dem der Punktdetektor 33 Detektionslicht 51 empfängt. Der Punktdetektor 33 beinhaltet einen Multibanddetektor 36, der simultan Detektionslicht 51 in mehreren einstellbaren Wellenlängenbändern empfangen kann. Das Beleuchtungslichtstrahlenbündel des Argonionenlasers 3 beinhaltet Beleuchtungslicht mehrerer Wellenlängen, wodurch eine Mehrfarbanregung der Probe ermöglicht ist.

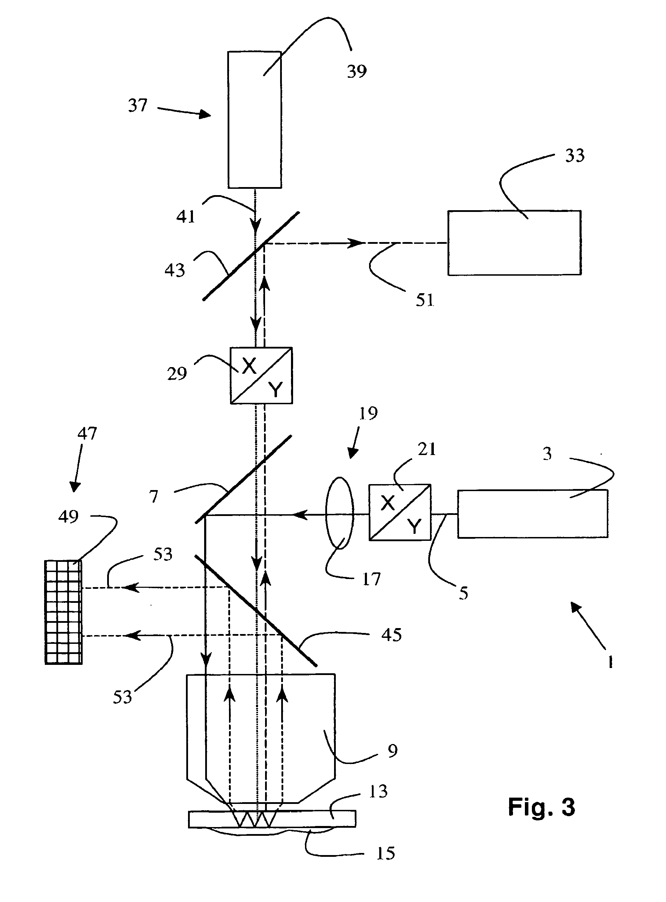

Fig. 3 zeigt ein weiteres erfindungsgemäßes Rastermikroskop, bei dem simultan zur TIRF-Untersuchung einer Probe eine konfokale Untersuchung einer Probe ermöglicht ist. Dieses Rastermikroskop beinhaltet eine weitere Lichtquelle 37, die als gepulster Titan-Saphirlaser 39 ausgebildet ist und die ein weiteres Beleuchtungslichtstrahlenbündel 41 emittiert. Das weitere Beleuchtungslichtstrahlenbündel 41 gelangt durch einen zweiten Strahlteiler 43 und über die Strahlablenkeinrichtung 29, sowie durch den Strahlteiler 7 und einen dritter Strahlteiler 45 zum Objektiv 9 und beleuchtet durch den Innenbereich 27 der Segmentblende 23 durch die Probe 15 direkt. In der Probe 15 wird unabhängig von der TIRF-Beleuchtung mit dem Beleuchtungslichtstrahlenbündel 5 durch das weitere Beleuchtungslichtstrahlenbündel 41 eine Zweiphotonenanregung der Probe bewirkt. Das durch die Zweiphotonenanregung der Probe entstehende weitere Detektionslicht 53 wird mit Hilfe eines Non-Descan-Detektors 47, der als CCD-Element 49 ausgebildet ist, detektiert. Dieses weitere Detektionslicht 53 gelangt über den Innenbereich des Objektivs, durch Reflektion am dritten Strahlteiler 45 zu dem Non-Descan-Detektor 47. Bei diesem Rastermikroskop ist in der Objektivpupille eine andere farbselektive Segmentblende eingesetzt, die im Außenrandbereich für das Beleuchtungslichtstrahlenbündel 5 der Lichtquelle 1 transparent ist und die im Innenbereich für dieses Licht reflektierend ausgebildet ist. Hierdurch ist gewährleistet, dass kein Beleuchtungslicht direkt auf die Probe eingestrahlt wird. Die Strahlteiler 7, 45 und 43 sind derart ausgebildet, dass weder das Licht des Beleuchtungslichtstrahlenbündels 5 als auch des Titan-Saphirlasers 39 zu dem Punktdetektor 33 oder zu dem Non-Descan-Detektor 47 gelangt.

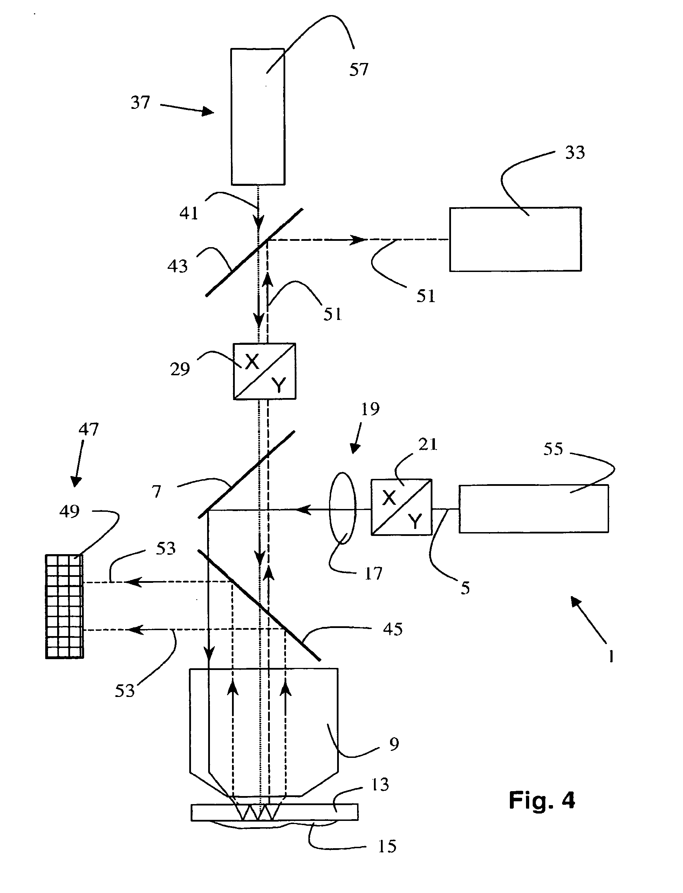

In Fig. 4 ist eine weitere denkbare Variante des erfindungsgemäßen Rastermikroskops dargestellt. In diesem Fall besteht die Lichtquelle 1 aus einem Titan-Saphirlaser 55, der ein Beleuchtungslichtstrahlenbündel 5 emittiert, das als TIRF-Beleuchtung durch den Außenrandbereich 25 einer farbselektiven Segmentblende 23 geführt wird. Die evaneszente Beleuchtung induziert in der Probe 15 Mehrphotonenanregung. Das daraus entstehende Fluoreszenzlicht gelangt durch die gesamte Segmentblende 23 über den dritten Strahlteiler 45 zum Non-Descan-Detektor 47, der als CCD-Element 49 ausgeführt ist. Direkt im Anschluss daran wird ein dreidimensionales Bild der Probe durch konfokale Beleuchtung mit einer Lichtquelle 37, die aus einem Argonionenlaser 57 besteht, und Detektion mit einem Punktdetektor 33, der als Multibanddetektor 36 ausgebildet ist, aufgenommen.

Die Erfindung wurde in Bezug auf eine besondere Ausführungsform beschrieben. Es ist jedoch selbstverständlich, dass Änderungen und Abwandlungen durchgeführt werden können, ohne dabei den Schutzbereich der nachstehenden Ansprüche zu verlassen.

### Bezugszeichenliste:

- 1: Lichtquelle
- 3: Argonionenlaser
- 5: Beleuchtungslichtstrahlenbündel
- 7: Strahlteiler
- 9: Objektiv
- 11: Objektivpupille
- 13: Deckglas
- 15: Probe
- 17: Bertrandtlinse
- 19: Abbildungsoptik
- 21: Strahlablenkeinrichtung
- 23: Segmentblende
- 24: Doppelpfeil
- 25: Außenrandbereich
- 27: Innenbereich
- 29: Strahlablenkeinrichtung
- 31: Scanspiegel
- 33: Punktdetektor
- 35: Detektionslochblende
- 36: Multibanddetektor
- 37: Lichtquelle
- 39: Titan-Saphirlaser
- 41: Beleuchtungslichtstrahlenbündel
- 43: zweiter Strahlteiler
- 45: dritter Strahlteiler
- 47: Non-Descan-Detektor
- 49: CCD-Element
- 51: Detektionslicht
- 53: Detektionslicht
- 55: Titan-Saphir-Laser
- 57: Argonionenlaser

## Patentansprüche

1. Rastermikroskop, mit einer Lichtquelle (1) zur Erzeugung eines Beleuchtungslichtstrahlenbündels (5), mit einem Objektiv (9) und einem Punktdetektor (33), wobei die Lichtquelle (1) zum evaneszenten Beleuchten einer auf einem Objektträger (13) angeordneten Probe (15) dient, wobei das Objektiv (9) eine Objektivpupille (11) aufweist und das Beleuchtungslicht durch den Außen-Randbereich der Objektivpupille (11) verläuft und wobei der Punktdetektor (33) von einem Rasterpunkt der Probe ausgehendes Detektionslicht (51) empfängt,
**gekennzeichnet durch** eine im Strahlengang des Detektionslichts (51) angeordnete erste ansteuerbare Strahlablenkeinrichtung (29) zum zeitabhängigen Verschieben der Position des Rasterpunktes in der Probe (15) und eine im Strahlengang des Beleuchtungslichts angeordnete zweite ansteuerbare Strahlablenkeinrichtung (21) zur Veränderung der räumlichen Lage des Beleuchtungslichts während der Untersuchung.

2. Rastermikroskop nach Anspruch 1, **dadurch gekennzeichnet, dass** das Rastermikroskop einen Kondensor aufweist und das Beleuchtungslicht durch den Kondensor in den Objektträger einkoppelbar ist.

3. Rastermikroskop nach Anspruch 1 oder 2, **dadurch gekennzeichnet, dass** das Beleuchtungslichtstrahlenbündel in der Ebene der Objektivpupille einen Fokus aufweist.

4. Rastermikroskop nach einem der Ansprüche 1 bis 3, **dadurch gekennzeichnet, dass** im Strahlengang des Beleuchtungslichtes eine weitere Strahlablenkeinrichtung vorgesehen ist, mit der die räumliche Lage des Beleuchtungslichtstrahlenbündels veränderbar ist.

5. Rastermikroskop nach Anspruch 4, **dadurch gekennzeichnet, dass** die weitere Strahlablenkeinrichtung das Beleuchtungslichtstrahlenbündel kreisend durch den Außen-Randbereich der Objektivpupille lenkt.

6. Rastermikroskop nach einem der Ansprüche 1 bis 5, **dadurch gekennzeichnet, dass** das Objektiv eine numerische Apertur größer 1,3, vorzugsweise zwischen 1,35 und 1,42, aufweist.

7. Rastermikroskop nach einem der Ansprüche 1 bis 6, **dadurch gekennzeichnet, dass** im Strahlengang des Beleuchtungslichts, vorzugsweise in der Ebene der Objektivpupille, eine farbselektive Segmentblende angeordnet ist.

8. Rastermikroskop nach Anspruch 7, **dadurch gekennzeichnet, dass** die farbselektive Segmentblende im Außen-Randbereich für Licht und Wellenlänge des Beleuchtungslichts transparent ist.

9. Rastermikroskop nach Anspruch 8, **dadurch gekennzeichnet, dass** die farbselektive Segmentblende im Innenbereich ausschließlich für Licht oberhalb Wellenlänge des Beleuchtungslichts transparent ist.

10. Rastermikroskop nach Anspruch 8, **dadurch gekennzeichnet, dass** die farbselektive Segmentblende im Innenbereich ausschließlich für Licht unterhalb Wellenlänge des Beleuchtungslichts transparent ist.

11. Rastermikroskop nach Anspruch 10, **dadurch gekennzeichnet, dass** das Beleuchtungslicht vorzugsweise gepulstes Infrarotlicht ist.

12. Rastermikroskop nach einem der Ansprüche 1 bis 11**, dadurch gekennzeichnet, dass** das Beleuchtungslicht mehrere Wellenlängen aufweist.

13. Rastermikroskop nach einem der Ansprüche 1 bis 12, **dadurch gekennzeichnet, dass** der Punktdetektor einen Multibanddetektor oder ein Spektrometer beinhaltet.

14. Rastermikroskop nach einem der Ansprüche 1 bis 12, **dadurch gekennzeichnet, dass** der Punktdetektor eine Detektionslochblende beinhaltet.

15. Rastermikroskop nach einem der Ansprüche 1 bis 14, **dadurch gekennzeichnet, dass** das Rastermikroskop als konfokales Rastermikroskop ausgebildet ist.

## Claims

1. Scanning microscope, having a light source (1) for generating an illuminating light beam (5), having an objective (9) and a point detector (33), the light source (1) being used for the evanescent illumination of a specimen (15) arranged on an object carrier (13), the objective (9) having an objective aperture diaphragm (11) and the illuminating light passing through the outer edge-region of the objective aperture diaphragm (11), and the point detector (33) receiving detecting light (51) coming from a scanning point of the specimen,
**characterised by** a first controllable beam-deflecting device (29), arranged in the beam path of the detecting light (51), for the time-dependent displacement of the position of the scanning point in the specimen (15) and a second controllable beam-deflecting device (21), arranged in the beam path of the illuminating light, for altering the spatial position of the illuminating light during the examination.

2. Scanning microscope according to claim 1, **characterised in that** the scanning microscope has a condenser and the illuminating light can be directed through the condenser into the object carrier.

3. Scanning microscope according to claim 1 or 2, **characterised in that** the illuminating light beam has a focal point in the plane of the objective aperture diaphragm.

4. Scanning microscope according to any one of claims 1 to 3, **characterised in that** a further beam-deflecting device, by means of which the spatial position of the illuminating light beam can be altered, is arranged in the beam path of the illuminating light.

5. Scanning microscope according to claim 4, **characterised in that** the further beam-deflecting device directs the illuminating light beam in a circulating manner through the outer edge-region of the objective aperture diaphragm.

6. Scanning microscope according to any one of claims 1 to 5, **characterised in that** the objective has a numerical aperture greater than 1.3, preferably from 1.35 to 1.42.

7. Scanning microscope according to any one of claims 1 to 6, **characterised in that** a colour-selective segment stop is arranged in the beam path of the illuminating light, preferably in the plane of the objective aperture diaphragm.

8. Scanning microscope according to claim 7, **characterised in that** the colour-selective segment stop is, in the outer edge-region, transparent to light of the wavelength of the illuminating light.

9. Scanning microscope according to claim 8, **characterised in that** the colour-selective segment stop is, in the inner region, transparent exclusively to light above the wavelength of the illuminating light.

10. Scanning microscope according to claim 8, **characterised in that** the colour-selective segment stop is, in the inner region, transparent exclusively to light below the wavelength of the illuminating light.

11. Scanning microscope according to claim 10, **characterised in that** the illuminating light is preferably pulsed infrared light.

12. Scanning microscope according to any one of claims 1 to 11, **characterised in that** the illuminating light has several wavelengths.

13. Scanning microscope according to any one of claims 1 to 12, **characterised in that** the point detector comprises a multi-band detector or a spectrometer.

14. Scanning microscope according to any one of claims 1 to 12, **characterised in that** the point detector comprises a detection pinhole diaphragm.

15. Scanning microscope according to any one of claims 1 to 14, **characterised in that** the scanning microscope is in the form of a confocal scanning microscope.

## Revendications

1. Microscope à balayage avec une source de lumière (1) pour produire un faisceau de rayons lumineux d'éclairage (5), avec un objectif (9) et un détecteur de point (33), la source de lumière (1) servant à l'éclairage évanescent d'un échantillon (15) disposé sur un porte-objet (13), l'objectif (9) présentant une pupille (11) et la lumière d'éclairage passant par de la pupille (11) et le détecteur de point (33) recevant la lumière de détection (51) provenant d'un point de trame de l'échantillon,
**caractérisé par** un premier dispositif de déviation de faisceau commandable (29) disposé sur le trajet de la lumière de détection (51) pour décaler en fonction du temps la position du point de trame dans l'échantillon (15) et par un deuxième dispositif de déviation de faisceau commandable (21) disposé sur le trajet de la lumière d'éclairage pour modifier la position dans l'espace de la lumière d'éclairage pendant la recherche.

2. Microscope à balayage selon la revendication 1, **caractérisé en ce que** le microscope à balayage présente un condenseur et que la lumière d'éclairage peut être couplée à travers le condenseur dans le porte-objet.

3. Microscope à balayage selon la revendication 1 ou 2, **caractérisé en ce que** le faisceau de rayons lumineux d'éclairage présente un foyer dans le plan de la pupille d'objectif.

4. Microscope à balayage selon l'une des revendications 1 à 3, **caractérisé en ce qu'**un autre dispositif de déviation de faisceau est prévu sur le trajet de la lumière d'éclairage, avec lequel la position dans l'espace du faisceau de rayons lumineux d'éclairage peut être modifiée.

5. Microscope à balayage selon la revendication 4, **caractérisé en ce que** l'autre dispositif de déviation de faisceau dévie le faisceau de rayons lumineux d'éclairage en tournant, à travers la zone de bordure extérieure de la pupille.

6. Microscope à balayage selon l'une des revendications 1 à 5, **caractérisé en ce que** l'objectif présente une ouverture numérique supérieure à 1,3 et située de préférence entre 1,35 et 1,42.

7. Microscope à balayage selon l'une des revendications 1 à 6, **caractérisé en ce qu'**un diaphragme segmenté de sélection de couleurs est disposé sur le trajet du faisceau de lumière d'éclairage, de préférence dans le plan de la pupille d'objectif.

8. Microscope à balayage selon la revendication 7, **caractérisé en ce que** le diaphragme segmenté de sélection de couleurs est transparent pour la lumière et la longueur d'onde de la lumière d'éclairage dans la zone de bordure extérieure.

9. Microscope à balayage selon la revendication 8, **caractérisé en ce que** le diaphragme segmenté de sélection de couleurs n'est transparent dans la zone intérieure que pour la lumière présentant une longueur d'onde supérieure à celle de la lumière d'éclairage exclusivement.

10. Microscope à balayage selon la revendication 8, **caractérisé en ce que** le diaphragme segmenté de sélection de couleurs n'est transparent dans la zone intérieure que pour la lumière présentant une longueur d'onde inférieure à celle de la lumière d'éclairage exclusivement.

11. Microscope à balayage selon la revendication 10**, caractérisé en ce que** la lumière d'éclairage est de préférence une lumière infra rouge pulsée.

12. Microscope à balayage selon l'une des revendications 1 à 11, **caractérisé en ce que** la lumière d'éclairage présente plusieurs longueurs d'onde.

13. Microscope à balayage selon l'une des revendications 1 à 12, **caractérisé en ce que** le détecteur de point comporte un détecteur multi bandes ou un spectromètre.

14. Microscope à balayage selon l'une des revendications 1 à 12, **caractérisé en ce que** le détecteur de point comporte un diaphragme perforé de détection.

15. Microscope à balayage selon l'une des revendications 1 à 14, **caractérisé en ce que** le microscope à balayage est conformé en microscope à balayage à foyer commun.
